# EUROPEAN PATENT APPLICATION

(11) **EP 4 716 214 A1**
(43) Date of publication of application: **25.03.2026**
(21) Application number: 24306546.3
(22) Date of filing: 20.09.2024
(51) Int. Cl.: H04N 19/17, H04N 19/70, H04N 19/85, H04N 21/234, H04N 21/44, G06T 17/00

(54) **TEXTURE SEGMENTATION IN SCENE DESCRIPTION**

(71) Applicant: InterDigital CE Patent Holdings, SAS, 75017 Paris (FR)
(72) Inventor: GOSSELIN, Philippe Henri, 35235 THORIGNE-FOUILLARD (FR); AVRIL, Quentin, 35830 BETTON (FR); KAROUI, Mohamed Amine, 35700 RENNES (FR)
(74) Representative: Vossius & Partner Patentanwälte Rechtsanwälte mbB

(57) **Abstract**

A method of encoding a texture segmentation in a three-dimensional mesh topology. The method comprising signaling the three-dimensional mesh topology, a texture mapping, and a label mapping in an encoded bitstream, the label mapping including a mapping of pixel coordinates to one or more labels.

## Description

### BACKGROUND

The present application is related to encoding of texture segmentations in three-dimensional scene representations. More specifically, encoding of texture segmentations that label each pixel of a texture image.

### BRIEF SUMMARY

Briefly stated, in one embodiment, a method of encoding a texture segmentation in a three-dimensional mesh topology, the method comprising signaling the three-dimensional mesh topology, a texture mapping, and a label mapping in an encoded bitstream, the label mapping including a mapping of pixel coordinates to one or more labels.

In a second embodiment, a method of decoding a texture segmentation in a three-dimensional mesh topology, the method comprising decoding the three-dimensional mesh topology, a texture mapping, and a label mapping in an encoded bitstream, acquiring a surface location of the three-dimensional mesh topology, computing a texture location based on the surface location and the texture mapping, computing one or more discrete texture locations based on the texture location and a pixel selection method, the one or more discrete texture locations including one or more pixel coordinates in a two-dimensional space of the three-dimensional mesh topology, converting each of the one or more discrete texture locations into a corresponding one or more labels based on the label mapping, and applying the one or more labels to the three-dimensional mesh topology.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates several examples of texture maps used for an avatar's face according to one or more embodiments of the present disclosure;
FIG. 5 illustrates a segmentation texture which may used in addition to the albedo to isolate semantic parts the face of the avatar according to one or more embodiments of the present disclosure;
FIG. 6 is a flowchart that illustrates an example video encoding method and an example decoding method according to one or more embodiments of the present disclosure;
FIGS. 7A-7C illustrate an example of an avatar encoded using the AJIF format according to one or more embodiments of the present disclosure; and
FIGS. 8A-8C illustrate an example of an avatar encoded using the glTF format according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

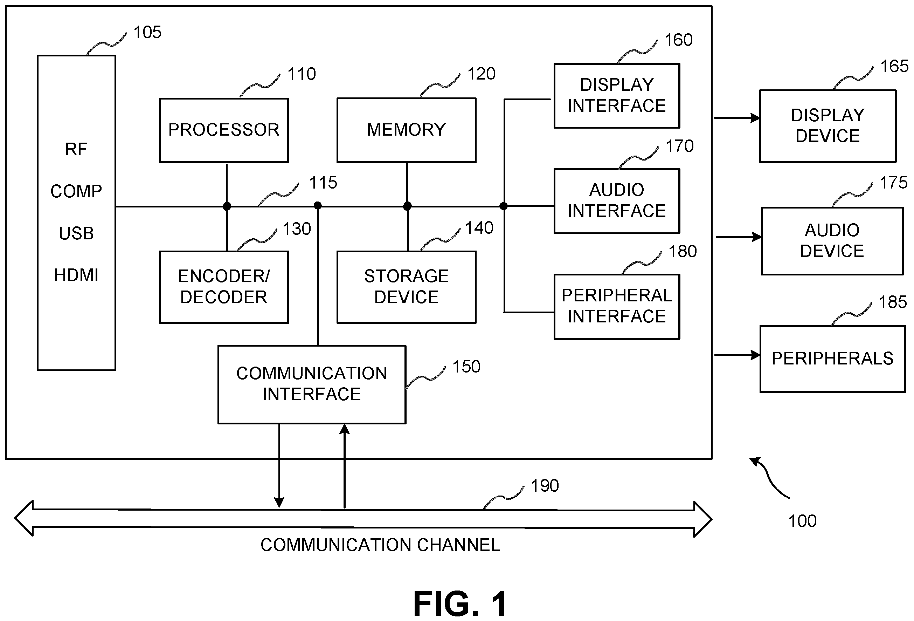

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

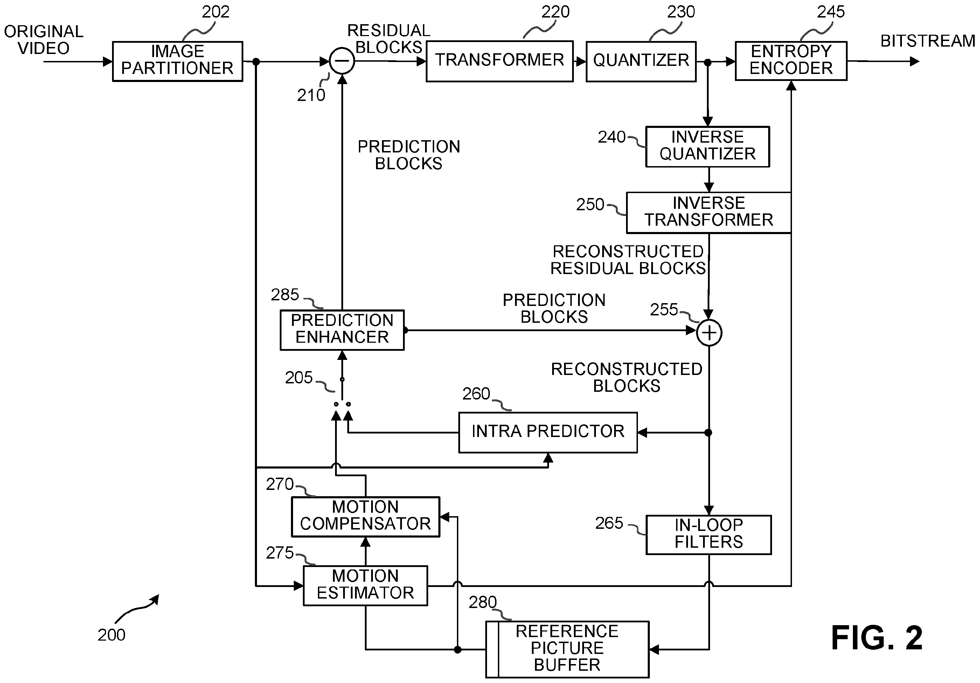

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

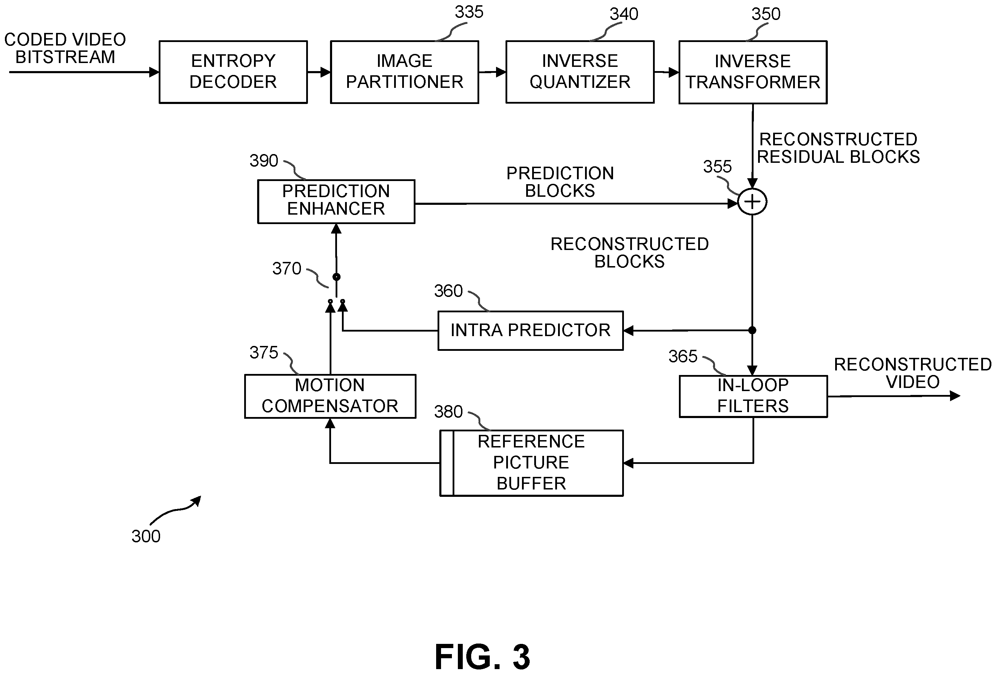

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, *U* and *V* (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

The current scene description formats allow the signaling of a texture for 3D models. With a set of two-dimensional coordinates (e.g., UV coordinates) and an image, a texture can be generated and mapped onto the surface of a 3D model. The texture generated and mapped onto the surface of the 3D model can lead to better rendering than other coloring techniques (e.g., vertex-based coloring). In fact, the higher the resolution of the image, the better the rendering because the texture generated and mapped onto the surface of the 3D model allows for much higher resolution compared to vertex-based coloring, which simply applies one single color per vertex.

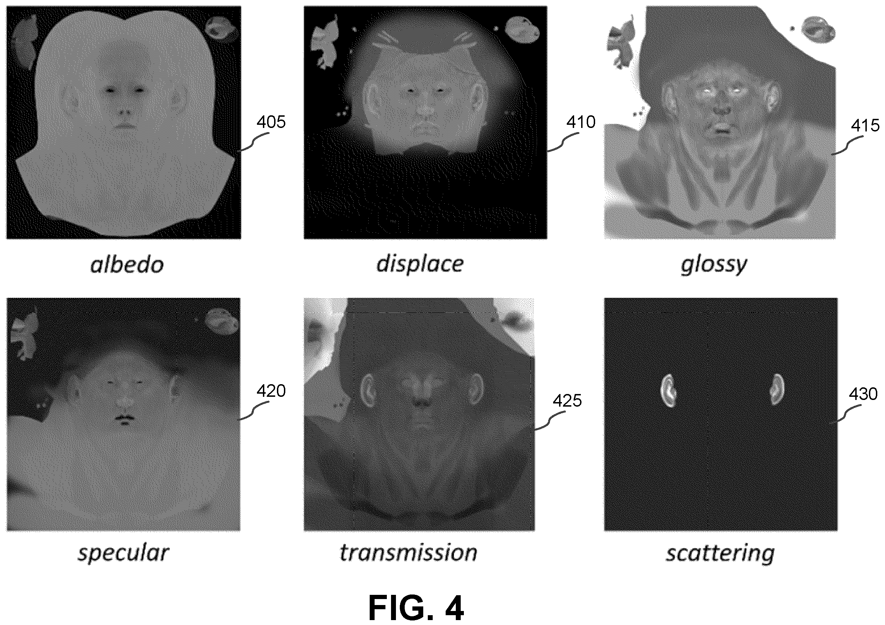

Textures may also be used to define properties on the surface of a 3D models other than colors. FIG. 4 illustrates several examples of texture maps 405-430 used for an avatar's face according to one or more embodiments of the present disclosure. The albedo map 405 defines the color to apply to the surface. The displace map 410 defines the direction of the normal on the surface of the mesh (x,y,z direction coded in r,g,b). The glossy map 415 defines the sharpness of the reflection of the light on the surface etc. The specular map 420 defines the shininess of the surface, which changes the color depending on the camera orientation (on the contrary to the albedo, which always has the same color, whatever the camera orientation). The transmission map 425 defines the amount of surfacing transparency. Skin is good example, since first layers of the skin are a bit transparent, contrary to the deeper ones. The scattering map 430 defines the effect of sub-surfaces, like the deepest skin layers. The scattering map 430 used to be complementary to the transmission texture.

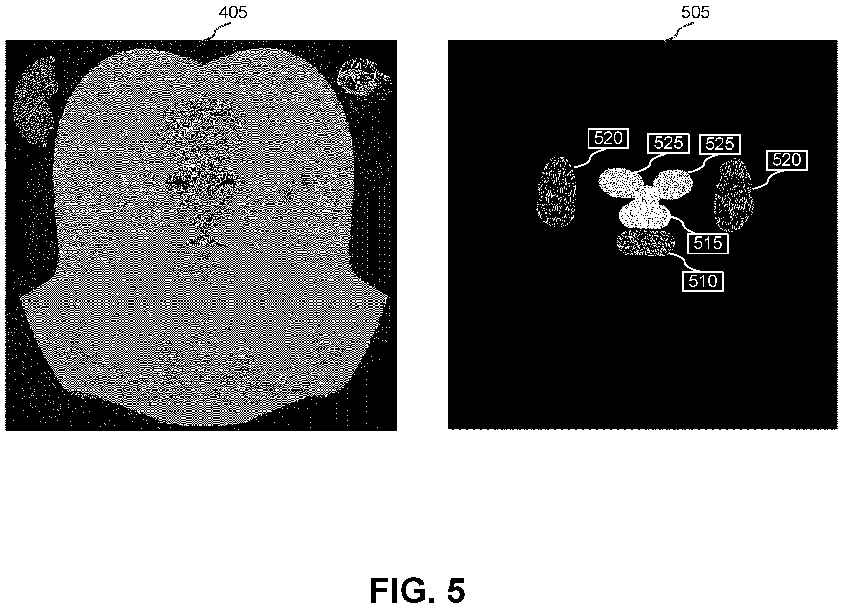

Texture may also be used to define labels on the surface of a 3D models. In this case, for any point on the surface of the 3D model, one or more labels may be defined. FIG. 5 illustrates a segmentation texture 505 which may be used in addition (or not) to the albedo map 405 to isolate semantic parts the face of the avatar according to one or more embodiments of the present disclosure. The colored areas of the segmentation texture 505 are visible and may be used to define labels on the surface of the mesh. In some examples, labels are integer values (a unique number for each category/segment) or strings (a unique string for each category/segment). For example, with respect to FIG. 5, "red" is the lips area 510 of the avatar, "yellow" corresponds to the nose area 515 of the avatar, "blue" corresponds to the ear area 520 of the avatar, and "green" corresponds to eye area 525 of the avatar.

On the contrary to more usual properties, like colors or normal vectors, labels are discrete, which means that each point of the surface can only have one or more of the possible values (or none), and nothing in between. For instance, when labels are integers, like 2 or 3, then possible labels for a given point are none, 2, 3 or 2 and 3, but not 2.3. In the end, a label texture provides a segmentation of the surface of a 3D model, which can be a partition when one and only label is allowed per point on the surface.

The applications of texture segmentations are numerous. In one example, the location defined by each label may be used to provide a feature. For example, the texture segmentation of a face may be used for make-up, or to determine the "monkey mask" (region going vertically from the chin to the middle of the forehead and horizontally from one temple to the other). A texture segmentation of a human body may also be used for interaction: for instance, the surface of the top of each finger may be labelled with a specific category, and then used to determine which finger is possibly touching an object. In all cases, the accuracy may be very high, even when the 3D model has few vertices and faces.

Currently, a video encoding format that signals texture segmentation and associated data does not exist. One workaround is to provide the texture segmentation and associated data in separate files alongside the main scene file. Another workaround is to consider that each color of a texture image corresponds to a category and add the correspondence between each color and a label in the extralmetadata sections of the scene file for a format that supports the extra/metadata sections of the scene file. However, the application must know these workarounds or let the user connect everything together.

The present application solves the above-noted problem by providing video encoding methods, devices, and computer-readable medium that signal texture segmentation and associated data. Specifically, video encoding and decoding methods, devices, and computer-readable medium of the present disclosure signal all the data required to determine labels (none, one or more) given a location on the surface of a 3D mesh, wherein the label(s) can be used to provide a feature.

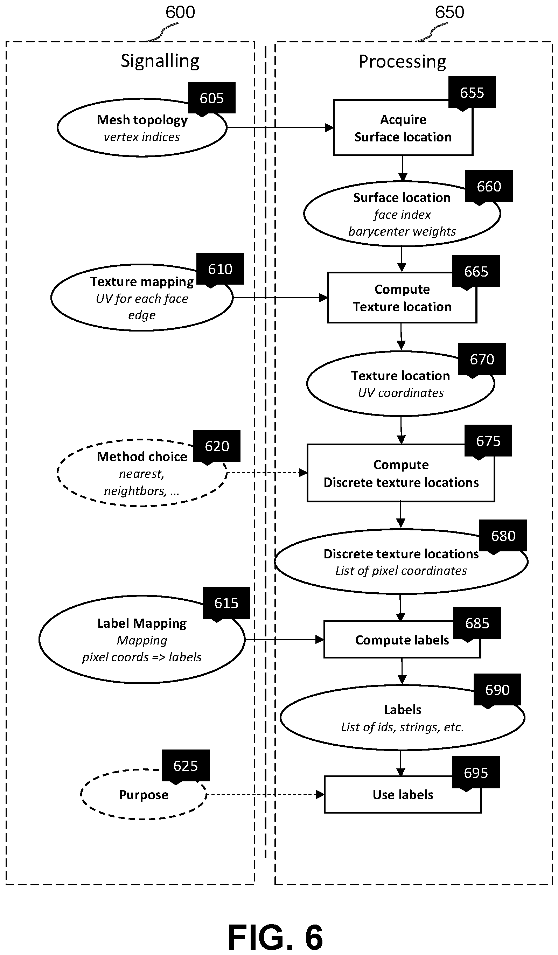

FIG. 6 is a flowchart that illustrates an example video encoding method 600 and an example decoding method 650 according to one or more embodiments of the present disclosure. As illustrated in FIG. 6, the example video encoding method 600 includes signaling a mesh topology 605, a texture mapping 610, and label mapping 615. In some examples, the mesh topology 605 may include vertex indices. In some examples, where the mesh topology is with respect to a face, the texture mapping 610 may include two-dimensional coordinates (e.g., UV coordinates) for each face edge. In some examples, the label mapping 615 may include a mapping of pixel coordinates to one or more labels.

Additionally, in some examples, the example video encoding method 600 may further include signaling a pixel selection method 620, a purpose 625, or both. In some examples, the pixel selection method 620 may be a selection of a closest pixel to two-dimensional coordinates of a discrete texture location, a selection of a closest pixel to two-dimensional coordinates of a discrete texture location in a predetermined direction, or a selection of a predetermined number of pixels around two-dimensional coordinates of a discrete texture location. In some examples, the purpose 625 may be the definition of labels (e.g., name, identifier, description, or other suitable description). Additionally, in some examples, these definitions must be signaled or at least default definitions must be pre-defined.

As illustrated in FIG. 6, the example video decoding method 650 includes acquiring a surface location 655, computing a texture location 665, computing one or more discrete texture locations 675, computing labels 685, and using labels 695. A surface location is usually defined by the index of a face and three barycenter weights (660). Such definition requires a mesh topology (605), which can be signaled using current scene formats. For example, in glTF, the "indices" property of an item of "primitives" in "meshes" signals a mesh topology. How the surface location is acquired (655) is not part of the addressed problem; it is assumed that the surface location is directly provided or computed by the application. For instance, a user interface can allow the user to click on a mesh rendered on an electronic screen. Then, the application casts a ray from the user selection point (e.g., a mouse click or other cursor control input, a touchpoint on a touchscreen, or the like) to the mesh; in case of intersection, a surface location is obtained.

The computation of the texture location (665) is the result of a weighted sum of UV coordinates of a face; in this case, the face and the barycenter weights (e.g., the three barycenter weights as described above) are the ones of the surface location. A texture location is a two-dimensional coordinate within the texture UV space (670), usually two real numbers between 0 and 1. Such computation requires a texture mapping (610), which can also be signaled using current scene formats. For example, in glTF, the "TEXCOORD_n" attribute of a mesh primitive contains the texture mapping information.

The computation of discrete texture locations (675) is not present in usual texture processing, where the two-dimensional coordinates are directly used to compute the expected property (for example, the color of a surface location). Discrete texture locations are made of pixel coordinates in the texture UV space (680). Each pixel coordinate identifies a single pixel in the texture. However, unlike the usual UV coordinates, there are no "in between" values.

The computation of discrete texture locations (675) may include selecting the closest pixel to the UV coordinate (with the question of the pixel location: top-left, center, ... ?) or selecting the pixels around the UV coordinate (four, five, nine pixels?). As a result, the pixel selection method may be optionally signaled (620) or a default pixel selection method may be pre-defined.

The computation of labels includes converting each discrete texture location into one or more labels (685). Each label may be an integer, a string or other type of value, as long as each label uniquely identifies a category (690). For example, labels may be: 1, 2, 3 or "eye", "nose", "mouth". The conversion from a texture pixel coordinate to labels is straightforward as long as a mapping from texture pixels to list labels is available. As a result, the label mapping 615 must be signaled. Furthermore, when the feature to provide needs to know the definition of labels (name, identifier, purpose, description, or other suitable definition), then these definitions may also signaled or may be pre-defined.

The use of the labels (695) includes providing a feature. For instance, in the example of a user interface where a mouse click may select a part of a mesh, the application may determine labels associated with the selected part of the mesh and return the associated labels for display on an electronic screen. For instance, when the mesh is the face of an avatar, and the texture segmentation divides the face into categories like "mouth", "nose" or "eye", then the user may select one of these parts through a mouse click. In an application for editing an avatar, this feature may be used to select a part of the face, and then change the appearance of the selected part using a dedicated UI component. For cases where there is no ambiguity about the usage of the labels returned by the processing, an application may have predefined instructions on what to do with the texture segmentation. In other cases with ambiguity, the purpose of the texture segmentation may be signaled (625).

Two embodiments are presented in the following sections: one with glTF 2.0, and one with AJIF. AJIF is a format dedicated to an avatar. However, the present application is not limited to two embodiments, and other embodiments are possible with other scene description formats (e.g., USD, FBX, or other suitable scene description format.).

In both embodiments, a list of texture labels sets is defined and referred to as "label mapping." Each texture label in the label mapping defines a mapping between two-dimensional coordinates and one or more labels. For instance, an image where the color of each pixel corresponds to a label. Texture label sets are not defined directly where they are used because several items may need the same label set (for instance, several mesh primitives may use the same labels set but with different UV coordinates). The list of texture labels sets is similar to the list of textures in glTF and AJIF, except that textures define colors while texture labels sets define labels and pixel to label mappings. With respect to glTF, the new "MPEG_texture_labelsets" defines the list of texture label sets.

Texture labels cannot be used alone. As for texture colors, UV coordinates attached to a topology is required. As a result, UV coordinates related to a mesh primitive must be attached to texture labels, which in the end forms a texture segmentation. This is similar to the *TextureInfo* properties in glTF or the *Texture* property in AJIF. In the case of glTF, the new "MPEG_primitive_segmentations" extension defines one or more combinations of UV coordinates of a primitive with texture labels.

Unlike the usual textures, which are made for rendering, there is no default purpose for a texture segmentation. As a result, when the texture segmentation is provided with the purpose 625, then the application may use the label when the purpose corresponds to an expected feature (otherwise, the segmentation is ignored). In the case of glTF, the "purpose" property of the new *PrimitiveSegmentation* may define a purpose.

Another proposed solution is to use new extensions or properties which define the purpose of a texture segmentation. There are numerous possibilities, for instance the monkey mask of an avatar may be defined with a new dedicated property which references a texture segmentation. With respect to glTF, the new "monkeyMask" property of "MPEG_node_avatar" introduces this possibility.

In a first embodiment, the proposed scene description format follows the glTF format and is compatible with the recent MPEG-I SD standard. MPEG_texture_labels is a new extension at the root of the glTF file:

**TABLE 1: The new MPEG_texture_segmentations.**

| NAME | TYPE | DESCRIPTION | REQ. |
|---|---|---|---|
| labelSets | TextureLabelSet [1-*] | List of texture labels definitions. | Yes |

The "labelSets" property contains a list of TextureLabelSet, each one defining texture labels (see Table 9 below for details). Items in "labelSets" can be referenced in the glTF using their index in the list, or their name (e.g., the "name" property in *TextureLabelSet*)*.* For example, if "labelSets" has three items, then a value of 1 in another property in the file corresponds to the second item in the "labelSets" list.

MPEG_primitive_segmentations is a new extension of an item of the "primitives" property of an item of the "meshes" root property of the glTF file:

**TABLE 1: The new MPEG_primitive_segmentations extension.**

| NAME | TYPE | DESCRIPTION | REQ. |
|---|---|---|---|
| segmentations | PrimitiveSegmentation [1-*] | List of primitive segmentations. | Yes |

The "segmentations" property contains a list of *PrimitiveSegmentation,* each one defining a texture segmentation (see next section for details).

*PrimitiveSegmentation* contains the following properties:

**TABLE 2: The new PrimitiveSegmentation property.**

| NAME | TYPE | DESCRIPTION | REQ. |
|---|---|---|---|
| Name | string | The name of this primitive segmentation. | No |
| description | string | Description of the segmentation. | No |
| purpose | string | The purpose of the segmentation. | No |
| texCoord | integer | This integer value is used to construct a string in the format TEXCOORD_<set index> which is a reference to a key in mesh.primitives.attributes (e.g., a value of 0 corresponds to TEXCOORD_0). | Yes |
| discretization | string | The method for computing the discrete texture locations. | No |
| labelSet | integer | References to a texture label set. | Yes |

The main role of the *PrimitiveSegmentation* property is to form a texture segmentation combining texture labels (labels definition and mapping pixels coordinates to labels) with a texture mapping (UV coordinates for each face edge).

The "name" property defines the name of the segmentation. It can be used for indexing, e.g., to retrieve the segmentation knowing its name. The "description" property describes the segmentation. For instance, a description can be used in user interfaces to help the user understand which segmentation is being used. If "description" is not present, then the one defined in the labels referenced by "labelSet" is used.

The "purpose" property defines the purpose of the segmentation. These purposes can be defined by an application or a standard, for instance. For example, "um:mpeg:texseg:bodyparts" can be used to indicate that this segmentation splits a body into parts. If "purpose" is not present, then the one defined in the labels referenced by "labelSet" is used. The "texCoord" property references an attribute in the mesh primitive with key "TEXTCOORD_<i>" where <i> is the value of "texCoord". In the processing presented in Section **Error! Reference source not found.,** the texture mapping is used in the second step.

The "discretization" property defines the method to use for converting a UV coordinate to a list of pixel coordinates. For example, when "discretization" is "nearest", then a UV coordinate is converted to the coordinates of the closest pixel, considering that the center of the pixel is the UV coordinate of the pixel. For example, when the UV coordinate is u = 0.31, *v* = 0.78, the width of the texture is 256 and the height of the texture is 256, then the coordinates of the closest pixel are *x = floor*(0.31 * 256) = 79 and *y = floor*(0.78 * 256) = 199. The output list is then {(79,199)}. When "discretization" is not present, then the one defined in the labels referenced by "labelSet" is used. In the processing presented in Section **Error! Reference source not found.,** this method is used in the third step.

The "labelSet" property references one of the texture labels defined in the "MPEG_texture_labelsets" extension. The referenced texture label set define the labels (name, properties, ...) and the mapping from pixels coordinates to labels. The referenced texture label set can also define default values for "discretization", "description" and "purpose" properties of *PrimitiveSegmentation*. In the processing presented in Section **Error! Reference source not found.,** the labels are used in the fourth step.

The texture segmentation of the present application may also be used for avatars. For example, the monkey mask of an avatar is signaled using a texture segmentation with one class: mesh points in this class are on the monkey mask.

The existing "MPEG_node_avatar" extension [2] is extended with a new "monkeyMask" property:

**Table 3: The MPEG_node_avatar property with the new monkey Mask property.**

| NAME | TYPE | DESCRIPTION | REQ. |
|---|---|---|---|
| isAvatar | boolean | If true, this node contains the root of an avatar mesh. | Yes |
| type | string | The type of the Avatar representation is provided as a URN. | Yes |
| mappings | AvatarMapping [1-*] | The mapping between child nodes and semantics. | Yes |
| monkey Mask | string | References primitive segmentations. | No |

The "monkeyMask" property references one or more primitive segmentations in the mesh primitives of the avatar. The mesh primitives of the avatar are all the mesh primitives found starting from the node avatar (this one with a "MPEG_node_avatar" extension). For each primitive of the avatar with a "MPEG_primitive_segementations" extension, the embedded primitive segmentation are parsed, and the ones with a name equal to the value of "monkeyMask" are selected. These primitive segmentations are then used to determine whether a mesh point is part of the avatar monkey mask.

The AJIF format is "Avatar Json Interchange File Format" and has the following content with a new "textureLabelSets" property that is added:

**TABLE 4: The AJIF format with the new textureLabelSets property.**

| NAME | TYPE | DESCRIPTION | REQ. |
|---|---|---|---|
| data | RawData [1-*] | List of *RawData.* | No |
| textureLabelSets | TextureLabelSet [1-*] | List of *TextureLabelSet.* | No |
| geometries | Geometry [1-*] | List of *Geometry.* | No |
| nodes | Node [1-*] | List of *Node.* | No |
| textures | Texture [1-*] | List of *Texture.* | No |
| skeletons | Skeleton [1-*] | List of *Skeleton.* | No |
| controllers | Controller [1-*] | List of *Controller.* | No |
| lods | LOD [1-*] | List of *LOD.* | No |
| metadata | Metadata | Metadata about the avatar. | No |
| asset | Asset | Information about the file. | Yes |

All contents but the last two ("metadata" and "asset") are collections of *items.* Each collection is a list of items that can be referenced with their index in the list, where the first index is zero. For instance, when the *"nodes"* collection contains three items, then the reference of the first one is 0, the reference of the second one is 1, and the reference of the third one is 2.

The "textureLabelSets" property contains a list of TextureLabelSet, each one defining texture labels (see Table 9 below for details).

Items in "textureLabelSets" can be referenced in the AJIF using their index in the list, or their name (e.g., the "name" property in *TextureLabelSet*)*.* For example, when "textureLabelSets" has three items, then a value of 1 in another property in the file corresponds to the second item in the "textureLabelSets" list.

A *Geometry* defines a mesh with associated properties. The following shows the properties of *Geometry* with the new "textureSegmentations" property:

**Table 6: The Geometry property with the new textureSegmentations property. TextureSegmentation contains the following properties:**

| NAME | TYPE | DESCRIPTION | REQ. |
|---|---|---|---|
| name | string | Geometry name. | No |
| vertices | integer | References an item in the *"data"* collection. The referenced item must be a float tensor [number of vertices, 3]. | Yes |
| normals | integer | References an item in the *"data"* collection. The referenced item must be a float tensor [number of vertices, 3]. | No |
| uvs | integer [1-*] | List of references to an item the *"data"* collection. The ith referenced item must be a float tensor [number of uvs(i), 2]. | No |
| faces | Faces | *A Faces* object. | No |
| blendshapes | Blendshape [1-*] | List of *Blendshape.* | No |
| textures | Texture [1-*] | List of *Texture.* | No |
| textureS egmenta tions | TextureSegmentation [1-*] | List of *TextureSegmentation.* | No |

**TABLE 7: The new TextureSegmentation property.**

| NAME | TYPE | DESCRIPTION | REQ. |
|---|---|---|---|
| name | string | The name of this texture segmentation. | No |
| description | string | The description of the texture segmentation. | No |
| purpose | string | The purpose of the texture segmentation. | No |
| uvs | integer | References one of the UV coordinates in the geometry (see "uvs" and "faces" properties). | Yes |
| discretization | string | The method for computing the discrete texture locations. | No |
| labelSet | integer | References to a texture label set. | Yes |

The main role of the *TextureSegmentation* property is to form a texture segmentation combining texture labels (labels definition and mapping pixels coordinates to labels) with a texture mapping (UV coordinates for each face edge).

The "name" property defines the name of the segmentation and may be used for indexing, e.g., to retrieve the segmentation knowing its name. The "description" property describes the segmentation. For instance, a description may be used in user interfaces to help the user understand which segmentation is being used. When "description" is not present, then the one defined in "labelSet" is used.

The "purpose" property defines the purpose of the segmentation. These purposes may be defined by an application or a standard, for instance. For example, "um:mpeg:texseg:bodyparts" can be used to indicate that this segmentation splits a body into parts. If "purpose" is not present, then the one defined in "labelSet" is used.

The "uvs" property references UV coordinates in the geometry (in the "uvs" list of the parent *Geometry* object) and UV face indices in the geometry (in the "uvs" list in the "faces" property of the parent *Geometry* object). The reference is the index in the lists in the geometry properties. For example, when the "uvs" property is 1, then it refers the second item in the "uvs" list in the geometry and in the "uvs" list in the "faces" property of the geometry.

The "discretization" property defines the method to use for converting a UV coordinate to a list of pixel coordinates. For example, when "discretization" is "nearest", then a UV coordinate is converted to the coordinates of the closest pixel, considering that the center of the pixel is the UV coordinate of the pixel. For example, when the UV coordinate is *u* = 0.31, *v* = 0.78, the width of the texture is 256 and the height of the texture is 256, then the coordinates of the closest pixel are *x* = *floor*(0.31 * 256) = 79 and *y* = *floor*(0.78 * 256) = 199. The output list is then {(79,199)}. When "discretization" is not present, then the one defined in "labelSet" is used. In the processing presented in FIG. 6, the "discretization" property is used in the computation of discrete texture locations (675).

The "labelSet" property defines the labels (name, properties, ...) and the mapping from pixels coordinates to labels. The label set can also define default values for "discretization", "description" and "purpose" properties of *TextureSegmentation.* In the processing presented in FIG. 6, the "labelSet" property is used in the computation of labels (685).

With respect to texture segmentation and avatars, the monkey mask of an avatar is signaled for each level-of-detail (LOD) using a texture segmentation with one class: mesh points in this class are on the monkey mask, otherwise they are not. In each LOD the corresponding monkey mask may be signaled through the addition of a new "monkeyMask" property:

**TABLE 8: The AJIF LOD property with the new monkey Mask property.**

| NAME | TYPE | DESCRIPTION | REQ. |
|---|---|---|---|
| name | string | LOD name. | No |
| lod | integer | Indicates the level of details. Lower values correspond to higher level of details. | No, default 0 |
| mesh | integer | References a node in the *"nodes"* collection. | No |
| skeletons | integer [1-*] | List of references to skeletons in the *"skeletons"* collection. | No |
| controllers | integer [1-*] | List of references to controllers in the *"controllers"* collection. | No |
| monkey Mask | string | References texture segmentations. | No |

The "monkeyMask" property references one or more texture segmentations in the geometries of the LOD. The geometries of the LOD are all the geometries found starting from the node referenced by the "mesh" property. For each geometry of the LOD, the ones with texture segmentations are parsed. The texture segmentations with a name equal to the value of "monkeyMask" are selected. These texture segmentations are then used to determine whether a mesh point is part of the avatar monkey mask.

The following properties are not specific to AJIF or glTF and may be used in other formats. *TextureLabelSet* contains the following properties:

**TABLE 9: The TextureSegmentation property.**

| NAME | TYPE | DESCRIPTION | REQ. |
|---|---|---|---|
| name | string | The name of this texture label set. | No |
| description | string | The description of the segmentation. | No |
| purpose | string | The purpose of the segmentation. | No |
| discretization | string | A method for computing the discrete texture locations. | No |
| labels | TextureLabel [1-*] | Information about each label used in the segmentation. | No |
| mapping | string | How the mapping from pixels coordinates to labels is encoded, for instance "matrix" or "image". | Yes |
| If mapping is "matrix" { | | | |
| matrix | integer | References an item in the "data" or "accessors" collection with a matrix of indices. | Yes |
| } | | | |
| If mapping is "tuples" { | | | |
| tuples | integer | References an item in the "data" or "accessors" collection with tuples. | Yes |
| } | | | |
| If mapping is "image" { | | | |
| image | integer | References an item in the "data" or "image" collection with an image where each color corresponds to a label. | Yes |
| colors | integer [3] => integer [1-*] | Dictionary which maps a color to one or more label | Yes |
| } | | | |

The "name" property defines the name of the label set and may be used for indexing, e.g., to retrieve the label set knowing its name. The "description" property describes the label set. For instance, a description may be used in user interfaces to help the user understand which label set is being used.

The "purpose" property defines the purpose of the label set. These purposes can be defined by an application or a standard, for instance. For example, "um:mpeg:texseg:bodyparts" may be used to indicate that this segmentation splits a body into parts.

The "discretization" property defines the method to use for converting a UV coordinate to a list of pixel coordinates. The "labels" property contains the definition of the labels (see next section for details). Each label can always be uniquely identified using an index. The "index" property of a label defines this index, when present. When a label has no "index" property, then the location of the label in the "labels" list defines its index. For example, when "labels" has three items, and the second item has no "index" property, then the index of the second label is 1.

The "mapping" property defines how the mapping from pixel coordinates to labels are encoded. When "mapping" is "matrix", then a matrix with integer values is used to encode the mapping. The matrix is defined by the item referenced by the "matrix" property. The width of the matrix is the width of the texture, and the height of the matrix is the height of the texture. Positive values define a label for the corresponding pixel. For example, when *Mᵢⱼ* = 3, then the label of pixel at coordinates (i,j) is 3. Negative values define the lack of label for the corresponding pixel. For example, when *Mᵢⱼ* = -1, then there is no label for the pixel at coordinates (i,j).

When "mapping" is "tuples", then a list of tuples is used to encode the mapping. The list of tuples is defined by the item referenced by the "tuples" property. Each tuple is made of three or more integer values, where the two first ones are the coordinates of a pixel and the remaining ones the corresponding labels. For instance, the list [(12,7,3,4),(14,2,1),(18,19,0,7,2)] defines the labels 3 and 4 for pixel (12,7), the label 1 for pixel (14,2) and the labels 0, 7 and 2 for pixel (18,19). Tuples encoding is natively supported in AJIF. For glTF, they can be signaled using the "MPEG_accessor_tuples" introduced in disclosure 2024ID00124 "Polygons in Scene Descriptions".

When "mapping" is "image", then an image is used to encode the mapping. The image is defined by the item referenced by the "image" property. The width of the image is the width of the texture, and the height of the image is the height of the texture. The "colors" property defines the correspondence between a color and a label. Pixels in the image with no corresponding color in "colors" have no label. For example, when a 2x2 image has pixels *I*₀₀ = (255,0,0), *I*₀₁ = (0,255,0), *I*₁₀ = (0,0,255) and *I*₁₁ = (0,0,0) and colors is {(255,0,0)=>[3], (0,255,0)=>[7,1],(0,0,255)=>[2]}, then the label of pixel (0,0) is 3, the labels of pixel (0,1) is 7 and 1, the label of pixel (1,0) is 2, and the pixel (1,1) has no label. The colors here are used for decoding in the first place, and are not meant to be used for coloring the labels in a user interface, for example.

*TextureLabel* contains the following properties:

**TABLE 5: The TextureLabel property.**

| NAME | TYPE | DESCRIPTION | REQ. |
|---|---|---|---|
| name | string | The name of the label. | No |
| index | integer | The index of the label. | No |
| description | string | The description of the label. | No |
| color | number [3] | The color of the label. | No |
| purpose | string | The purpose of the label. | No |

The "name" property defines the name of the label and may be used for indexing, e.g., to retrieve the label knowing its name. The "index" property defines the name of the label and must be unique in the list which contains this label. When the "index" property is not present, the location in the list defines the index of the label.

The "description" property describes the label. For instance, a description may be used in user interfaces to help the user understand which label is being used.

The "color" property assigns a color to the label. For instance, a color may be used in user interfaces to present a color for each label. The "color" property of *TextureLabel* is not related to the "colors" property used in the decoding process in *TextureLabelSet.*

The "purpose" property defines the purpose of the label. For instance, these purposes may be defined by an application or a standard. For example, "um:mpeg:texseg:face:node" may be used to indicate that this label corresponds to the nose.

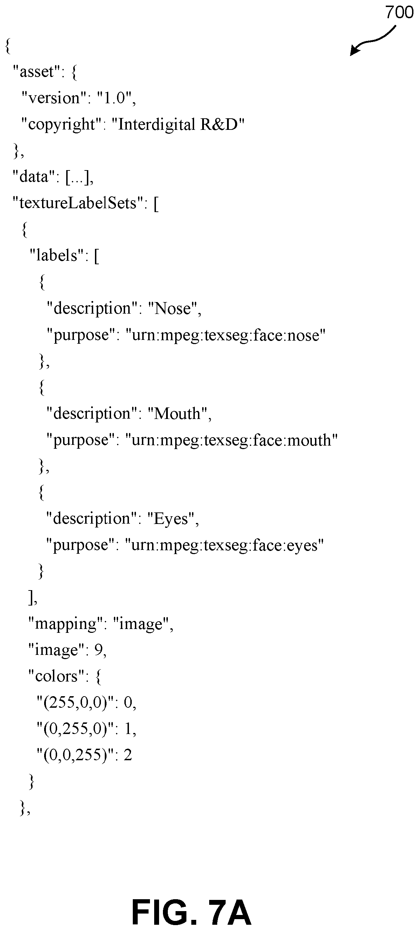

FIGS. 7A-7C illustrate an example of an avatar encoded using the AJIF format 700 according to one or more embodiments of the present disclosure. All is content parsed as defined by the "Avatar Json Interchange File Format" except for the "textureLabelSets" property and the "textureSegmentations" property of the first item of "geometries".

The "textureLabelSets" property is parsed and defines two texture label sets. The first texture label set of index 0 and the second texture label set of index 1.

As illustrated in FIG. 7A, the first texture label set is parsed and there are three labels ("labels" has three items). The labels descriptions are, respectively, "Nose", "Mouth", and "Eyes" ("description" properties of item in "labels"). The purposes of the labels are, respectively, to label the nose, mouth, and eye (each "purpose" property of the labels is a URN defining these purposes, assuming that a standard defined them). The mapping between pixel coordinates and labels is defined using an image ("mapping" is "image"). The image is encoded in the "data" root property with index 11 ("image" is 11). According to the "colors" property, the color (255,0,0) corresponds to label 0, the color (0,255,0) to label 1 and the color (0,0,255) to label 2.

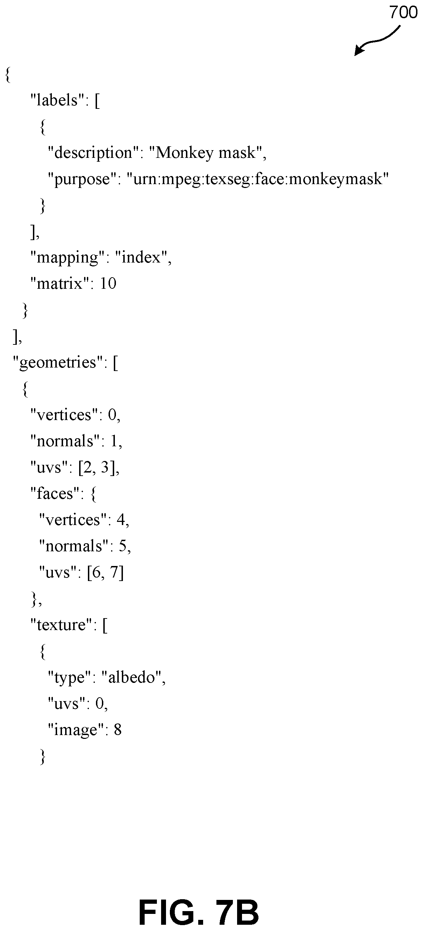

As illustrated in FIG. 7B, the second texture label set is also parsed and the purpose of the second texture label set is to identify the monkey mask of a face ("purpose" is "urn:mpeg:texseg:face:monkeymask"). The method to convert UV coordinates to list of pixels is the one which selects the closest pixel ("discretization" is "nearest", assuming a standard defined that "nearest" corresponds to this method). There is a single label with description "Monkey mask" ("description" is "Monkey mask"). The mapping between pixel coordinates and labels is defined using a matrix ("mapping" is "matrix"). The matrix is encoded in the "data" root property with index 10 ("matrix" is 10).

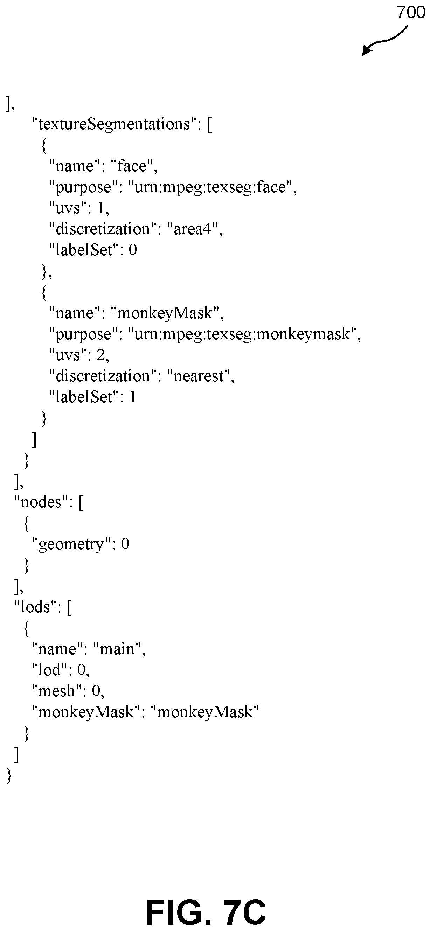

Then, in FIG. 7C, the "textureSegmentations" property of the first item of "geometries" is parsed and there are two texture segmentations defined by this property. The first texture segmentation is parsed and the purpose of this texture segmentation is to segment the face ("purpose" is "um:mpeg:texseg:face"). The texture segmentation uses the second UV mapping defined in the geometry ("uvs" is 1). This UV mapping is defined by the UV coordinates from the second item of the "uvs" property at the root of the geometry property and by the vertex indices from the second item of the "uvs" property in the "faces" property at the root of the geometry property. The method to convert UV coordinates to list of pixels is the one which selects the closest four pixels ("discretization" is "area4", assuming a standard defined that "area4" corresponds to this method). The texture label set being used is the first one of the "textureLabelSets" root property ("labelSet" is 0). This texture segmentation is not referenced anywhere in the AJIF file: this is up to the application to use it if required.

Additionally, in FIG. 7C, the second texture segmentation is parsed, and the purpose of this texture segmentation is inherited from the second texture label set ("labelSet" is 1) (e.g., the identification of the monkey mask). The method to convert UV coordinates to a list of pixels is inherited from the second texture label set ("labelSet" is 1) (e.g., selection of the closest pixel). The texture segmentation uses the third UV mapping defined in the geometry ("uvs" is 2). The texture label set being used is the second one of the "textureLabelSets" root property ("labelSet" is 1). This texture segmentation is referenced by the first item of the "lods" root property through the "monkeyMask" property, because the value of "monkeyMask" in the LOD is "monkeyMask" and the name of the texture segmentation is "monkeyMask" ("name" is "monkeyMask").

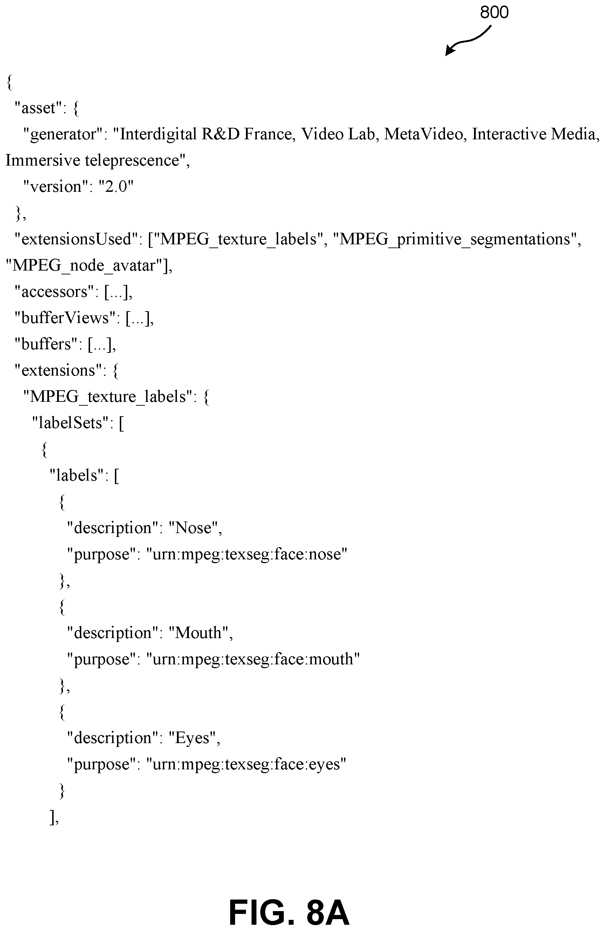

FIGS. 8A-8C illustrate an example of an avatar encoded using the glTF format 800 according to one or more embodiments of the present disclosure. All content is parsed as defined in glTF 2.0, except for the "textureLabelSets" property and the "MPEG_texture_labels", "MPEG_primitive_segmentations" and "MPEG_node_avatar" extensions.

As illustrated in FIG. 8A, the "MPEG_texture_labels" extension is parsed and defines two texture label sets, the first texture label set of index 0 and the second texture label set of index 1. The first texture label set is parsed and there are three labels ("labels" has three items). The labels descriptions are, respectively, "Nose", "Mouth" and "Eyes" ("description" properties of item in "labels"). The purposes of the labels are, respectively, to label the nose, mouth, and eye (each "purpose" property of the labels is a URN defining these purposes, assuming that a standard defined them).

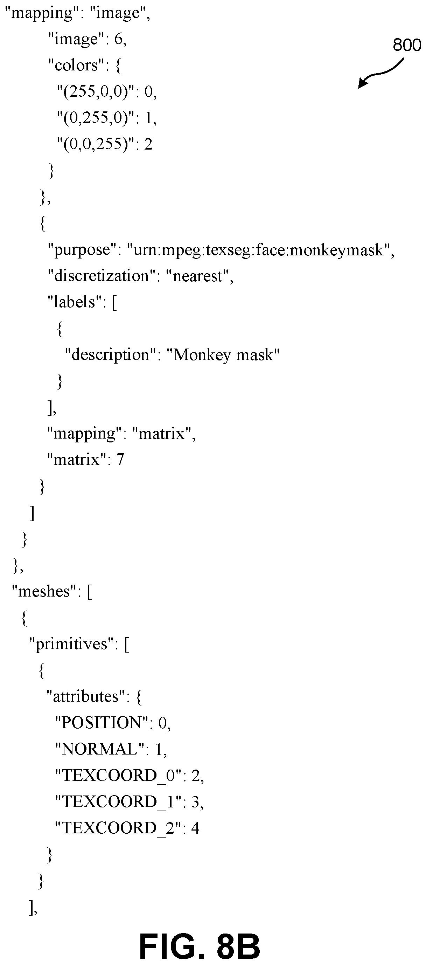

As illustrated in FIG. 8B, the mapping between pixel coordinates and labels is defined using an image ("mapping" is "image"). The image is encoded in the "data" root property with index 6 ("image" is 6). According to the "colors" property, the color (255,0,0) corresponds to label 0, the color (0,255,0) to label 1 and the color (0,0,255) to label 2.

The second texture label set is parsed and the purpose of the second texture label set is to identify the monkey mask of a face ("purpose" is "urn:mpeg:texseg:face:monkeymask"). The method to convert UV coordinates to list of pixels is the one which selects the closest pixel ("discretization" is "nearest", assuming a standard defined that "nearest" corresponds to this method). There is a single label with description "Monkey mask" ("description" is "Monkey mask"). The mapping between pixel coordinates and labels is defined using a matrix ("mapping" is "matrix"). The matrix is encoded in the "data" root property with index 7 ("matrix" is 7).

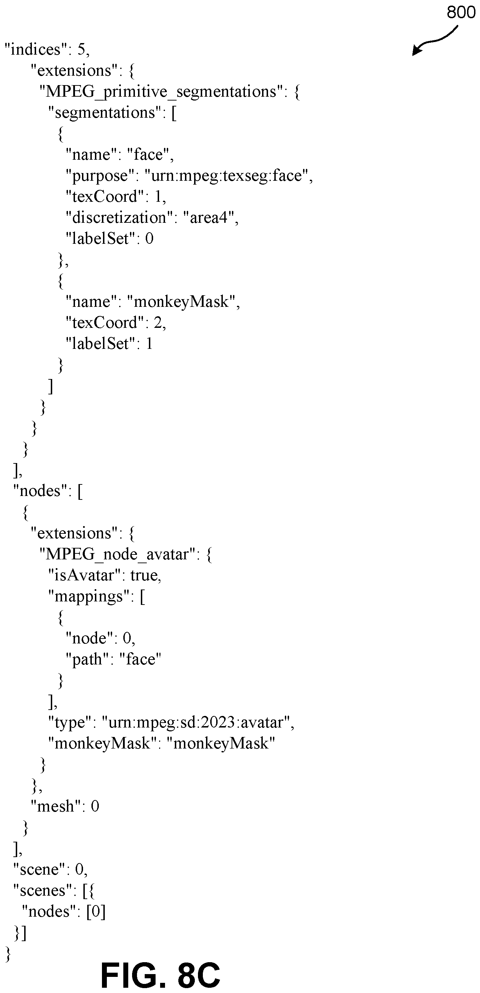

Then, as illustrated in FIG. 8C, the "MPEG_primitive_segmentations" extension of the first item of "primitives" of the first item of "meshes" is parsed and there are two texture segmentations defined by this extension ("segmentations" has two items). The first texture segmentation is parsed and the purpose of this texture segmentation is to segment the face ("purpose" is "um:mpeg:texseg:face"). The texture segmentation uses the second UV mapping defined in the primitive ("texCoord" is 1). The method to convert UV coordinates to list of pixels is the one which selects the closest four pixels ("discretization" is "area4", assuming a standard defined that "area4" corresponds to this method). The texture label set being used is the first one of the "MPEG_texture_labels" extension ("labelSet" is 0). This texture segmentation is not referenced anywhere in the glTF file: this is up to the application to use it if required.

The second texture segmentation is parsed and the purpose of this texture segmentation is inherited from the second texture label set ("labelSet" is 1), and is for the identification of the monkey mask. The method to convert UV coordinates to list of pixels is inherited from the second texture label set ("labelSet" is 1), and is the one which selects the closest pixel. The texture segmentation uses the third UV mapping defined in the primitive ("texCoord" is 2). The texture label set being used is the second one of the "textureLabelSets" root property ("labelSet" is 1). The second texture segmentation is referenced by the first item of the "MPEG_node_avatar" extension in the first node through the "monkeyMask" property because the value of "monkeyMask" in "MPEG_node_avatar" is "monkeyMask" and the name of the texture segmentation is "monkeyMask" ("name" is "monkeyMask").

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

The following are enumerated examples of methods, devices, and computer-readable medium of the present application. Example 1: a method of encoding a texture segmentation in a three-dimensional mesh topology, the method comprising: signaling the three-dimensional mesh topology, a texture mapping, and a label mapping in an encoded bitstream, the label mapping including a mapping of pixel coordinates to one or more labels.

Example 2: the method of Example 1, wherein the three-dimensional mesh topology includes vertex indices.

Example 3: the method of any of Examples 1 or 2, wherein the texture mapping includes two-dimensional coordinates for each face edge.

Example 4: the method of any of Examples 1-3, further comprising signaling a pixel selection method.

Example 5: the method of Example 4, wherein the pixel selection method includes selecting a closest pixel to two-dimensional coordinates of a discrete texture location.

Example 6: the method of Example 4, wherein the pixel selection method includes selecting a closest pixel to two-dimensional coordinates of a discrete texture location in a predetermined direction.

Example 7: the method of Example 4, wherein the pixel selection method includes selecting a predetermined number of pixels around two-dimensional coordinates of a discrete texture location.

Example 8: the method of any of Examples 1-7, wherein at least one label in the one or more labels represents a feature of an object represented via the three-dimensional mesh topology.

Example 9: the method of any of Examples 1-8, wherein at least one label in the one or more labels represents a feature of an avatar represented via the three-dimensional mesh topology.

Example 10: the method of any of Example 9, wherein the at least one label in the one or more labels represents a part of a face or body of the avatar.

Example 11: the method of any of Examples 1-10, further comprising signaling a definition of at least one label included in the label mapping in the encoded bitstream.

Example 12: a device comprising: an encoder configured to signal a three-dimensional mesh topology, a texture mapping, and a label mapping in an encoded bitstream, the label mapping including a mapping of pixel coordinates to one or more labels.

Example 13: the device of Example 12, wherein the three-dimensional mesh topology includes vertex indices.

Example 14: the device of any of Examples 12 or 13, wherein the texture mapping includes two-dimensional coordinates for each face edge.

Example 15: the device of any of Examples 12-14, wherein the encoder is further configured to signal a pixel selection method.

Example 16: the device of Example 15, wherein the pixel selection method includes selecting a closest pixel to two-dimensional coordinates of a discrete texture location.

Example 17: the device of Example 15, wherein the pixel selection method includes selecting a closest pixel to two-dimensional coordinates of a discrete texture location in a predetermined direction.

Example 18: the device of Example 15, wherein the pixel selection method includes selecting a predetermined number of pixels around two-dimensional coordinates of a discrete texture location.

Example 19: the device of any of Examples 12-18, wherein at least one label in the one or more labels represents a feature of an object represented via the three-dimensional mesh topology.

Example 20: the device of any of Examples 12-19, wherein at least one label in the one or more labels represents a feature of an avatar represented via the three-dimensional mesh topology.

Example 21: the device of Example 20, wherein the at least one label in the one or more labels represents a part of a face or body of the avatar.

Example 22: the device of any of Examples 12-21, wherein the encoder is further configured to signal a definition of at least one label included in the label mapping in the encoded bitstream.

Example 23: a non-transitory computer-readable medium comprising instruction that, when executed by an electronic processor, cause the electronic processor to perform a set of operations comprising: signaling a three-dimensional mesh topology, a texture mapping, and a label mapping in an encoded bitstream, the label mapping including a mapping of pixel coordinates to one or more labels.

Example 24: the non-transitory computer-readable medium of Example 23, wherein the three-dimensional mesh topology includes vertex indices.

Example 25: the non-transitory computer-readable medium of any of Examples 23 or 24, wherein the texture mapping includes two-dimensional coordinates for each face edge.

Example 26: the non-transitory computer-readable medium of any of Examples 23-25, wherein the set of operations further includes signaling a pixel selection method.

Example 27: the non-transitory computer-readable medium of Example 26, wherein the pixel selection method includes selecting a closest pixel to two-dimensional coordinates of a discrete texture location.

Example 28: the non-transitory computer-readable medium of Example 26, wherein the pixel selection method includes selecting a closest pixel to two-dimensional coordinates of a discrete texture location in a predetermined direction.

Example 29: the non-transitory computer-readable medium of Example 26, wherein the pixel selection method includes selecting a predetermined number of pixels around two-dimensional coordinates of a discrete texture location.

Example 30: the non-transitory computer-readable medium of any of Examples 23-29, wherein at least one label in the one or more labels represents a feature of an object represented via the three-dimensional mesh topology.

Example 31: the non-transitory computer-readable medium of any of Examples 23-30, wherein at least one label in the one or more labels represents a feature of an avatar represented via the three-dimensional mesh topology.

Example 32: the non-transitory computer-readable medium of Example 31, wherein the at least one label in the one or more labels represents a part of a face or body of the avatar.

Example 33: the non-transitory computer-readable medium of any of Examples 23-32, wherein the set of operations further includes signaling a definition of at least one label included in the label mapping in the encoded bitstream.

Example 34: a method of decoding a texture segmentation in a three-dimensional mesh topology, the method comprising: decoding the three-dimensional mesh topology, a texture mapping, and a label mapping in an encoded bitstream; acquiring a surface location of the three-dimensional mesh topology; computing a texture location based on the surface location and the texture mapping; computing one or more discrete texture locations based on the texture location and a pixel selection method, the one or more discrete texture locations including one or more pixel coordinates in a two-dimensional space of the three-dimensional mesh topology; converting each of the one or more discrete texture locations into a corresponding one or more labels based on the label mapping; and applying the one or more labels to the three-dimensional mesh topology.

Example 35: the method of Example 34, wherein acquiring the surface location includes receiving a selection of a location on a mesh rendered based on the three-dimensional mesh topology via a cursor device and acquiring the surface location based on the selection of the location on the mesh.

Example 36: the method of any of Examples 34 or 35, wherein computing the texture location includes computing a weighted sum of two-dimensional coordinates of the surface location.

Example 37: the method of any of Examples 34-36, wherein the pixel selection method includes selecting a closest pixel to two-dimensional coordinates of a discrete texture location.

Example 38: the method of any of Examples 34-37, wherein the pixel selection method includes selecting a closest pixel to two-dimensional coordinates of a discrete texture location in a predetermined direction.

Example 39: the method of any of Examples 34-38, wherein the pixel selection method includes selecting a predetermined number of pixels around two-dimensional coordinates of a discrete texture location.

Example 40: the method of any of Examples 34-39, wherein at least one label in the one or more labels represents a feature of an object represented via the three-dimensional mesh topology.

Example 41: the method of any of Examples 34-40, wherein at least one label in the one or more labels represents a feature of an avatar represented via the three-dimensional mesh topology.

Example 42: the method of Example 41, wherein the at least one label represents a part of a face or body of the avatar.

Example 43: the method of any of Examples 34-42, further comprising decoding a definition of at least one label included in the one or more labels from the encoded bitstream.

Example 44: a device comprising: an decoder configured to: decode a three-dimensional mesh topology, a texture mapping, and a label mapping in an encoded bitstream, acquire a surface location of the three-dimensional mesh topology, compute a texture location based on the surface location and the texture mapping, compute one or more discrete texture locations based on the texture location and a pixel selection method, the one or more discrete texture locations including one or more pixel coordinates in a two-dimensional space of the three-dimensional mesh topology, convert each of the one or more discrete texture locations into a corresponding one or more labels based on the label mapping, and apply the one or more labels to the three-dimensional mesh topology.

Example 45: the device of Example 44, wherein acquiring the surface location includes receiving a selection of a location on a mesh rendered based on the three-dimensional mesh topology via a cursor device and acquiring the surface location based on the selection of the location on the mesh.

Example 46: the device of any of Examples 44 or 45, wherein computing the texture location includes computing a weighted sum of two-dimensional coordinates of the surface location.

Example 47: the device of any of Examples 44-46, wherein the pixel selection method includes selecting a closest pixel to two-dimensional coordinates of a discrete texture location.

Example 48: the device of any of Examples 44-47, wherein the pixel selection method includes selecting a closest pixel to two-dimensional coordinates of a discrete texture location in a predetermined direction.

Example 49: the device of any of Examples 44-48, wherein the pixel selection method includes selecting a predetermined number of pixels around two-dimensional coordinates of a discrete texture location.

Example 50: the device of any of Examples 44-49, wherein at least one label in the one or more labels represents a feature of an object represented via the three-dimensional mesh topology.

Example 51: the device of any of Examples 44-50, wherein at least one label in the one or more labels represents a feature of an avatar represented via the three-dimensional mesh topology.

Example 52: the device of Example 51, wherein the at least one label represents a part of a face or body of the avatar.

Example 53: the device of any of Examples 44-52, wherein the decoder is further configured to decode a definition of at least one label included in the one or more labels from the encoded bitstream.

Example 54: a non-transitory computer-readable medium comprising instruction that, when executed by an electronic processor, cause the electronic processor to perform a set of operations comprising: decoding a three-dimensional mesh topology, a texture mapping, and a label mapping in an encoded bitstream; acquiring a surface location of the three-dimensional mesh topology; computing a texture location based on the surface location and the texture mapping; computing one or more discrete texture locations based on the texture location and a pixel selection method, the one or more discrete texture locations including one or more pixel coordinates in a two-dimensional space of the three-dimensional mesh topology; converting each of the one or more discrete texture locations into a corresponding one or more labels based on the label mapping; and applying the one or more labels to the three-dimensional mesh topology.

Example 55: the non-transitory computer-readable medium of Example 54, wherein acquiring the surface location includes receiving a selection of a location on a mesh rendered based on the three-dimensional mesh topology via a cursor device and acquiring the surface location based on the selection of the location on the mesh.

Example 56: the non-transitory computer-readable medium of any of Examples 54 or 55, wherein computing the texture location includes computing a weighted sum of two-dimensional coordinates of the surface location.

Example 57: the non-transitory computer-readable medium of any of Examples 54-56, wherein the pixel selection method includes selecting a closest pixel to two-dimensional coordinates of a discrete texture location.

Example 58: the non-transitory computer-readable medium of any of Examples 54-57, wherein the pixel selection method includes selecting a closest pixel to two-dimensional coordinates of a discrete texture location in a predetermined direction.

Example 59: the non-transitory computer-readable medium of any of Examples 54-58, wherein the pixel selection method includes selecting a predetermined number of pixels around two-dimensional coordinates of a discrete texture location.

Example 60: the non-transitory computer-readable medium of any of Examples 54-59, wherein at least one label in the one or more labels represents a feature of an object represented via the three-dimensional mesh topology.

Example 61: the non-transitory computer-readable medium of any of Examples 54-60, wherein at least one label in the one or more labels represents a feature of an avatar represented via the three-dimensional mesh topology.

Example 62: the non-transitory computer-readable medium of Example 61, wherein the at least one label represents a part of a face or body of the avatar.

Example 63: the non-transitory computer-readable medium of any of Examples 54-62, wherein the set of operations further includes decoding a definition of at least one label included in the one or more labels from the encoded bitstream.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of encoding a texture segmentation in a three-dimensional mesh topology, the method comprising:
signaling the three-dimensional mesh topology, a texture mapping, and a label mapping in an encoded bitstream, the label mapping including a mapping of pixel coordinates to one or more labels.

2. The method of claim 1, wherein the three-dimensional mesh topology includes vertex indices.

3. The method of claim 1, wherein the texture mapping includes two-dimensional coordinates for each face edge.

4. The method of claim 1, further comprising signaling a pixel selection method.

5. The method of claim 1, wherein at least one label in the one or more labels represents a feature of an object represented via the three-dimensional mesh topology.

6. The method of claim 1, wherein at least one label in the one or more labels represents a feature of an avatar represented via the three-dimensional mesh topology.

7. The method of claim 1, further comprising signaling a definition of at least one label included in the label mapping in the encoded bitstream.

8. A method of decoding a texture segmentation in a three-dimensional mesh topology, the method comprising:
decoding the three-dimensional mesh topology, a texture mapping, and a label mapping in an encoded bitstream;
acquiring a surface location of the three-dimensional mesh topology;
computing a texture location based on the surface location and the texture mapping;
computing one or more discrete texture locations based on the texture location and a pixel selection method, the one or more discrete texture locations including one or more pixel coordinates in a two-dimensional space of the three-dimensional mesh topology;
converting each of the one or more discrete texture locations into a corresponding one or more labels based on the label mapping; and
applying the one or more labels to the three-dimensional mesh topology.

9. The method of claim 8, wherein computing the texture location includes computing a weighted sum of two-dimensional coordinates of the surface location.

10. The method of claim 8, wherein at least one label in the one or more labels represents a feature of an object represented via the three-dimensional mesh topology.

11. The method of claim 8, wherein at least one label in the one or more labels represents a feature of an avatar represented via the three-dimensional mesh topology.

12. The method of claim 11, wherein the at least one label represents a part of a face or body of the avatar.

13. The method of claim 8, further comprising decoding a definition of at least one label included in the one or more labels from the encoded bitstream.

14. A device including a decoder configured to perform a method according to any of one of claims 8-13.

15. A device including an encoder configured to perform a method according to any of one of claims 1-7.
